# FASCICULE DE BREVET EUROPEEN

(11) **EP 3 991 615 B1**
(45) Date de publication et mention de la délivrance du brevet: **31.05.2023**
(21) Numéro de dépôt: 21205095.9
(22) Date de dépôt: 27.10.2021
(51) Int. Cl.: A47J 36/06, A47J 37/10, A47J 36/24

(54) **COUVERCLE CHAUFFANT AMOVIBLE**
ABNEHMBARE HEIZDECKEL
REMOVABLE HEATING LID

(30) Priorité: 29.10.2020 FR 2011115
(43) Date de publication de la demande: 04.05.2022
(73) Titulaire: SEB S.A., 69130 Ecully (FR)
(72) Inventeur: WANG, Ronghao, 21121 FONTAINES-LES-DIJON (FR); ALLEMAND, Bernard, 70100 VELESMES-ECHEVANNE (FR); DUMOUX, Philippe, 21120 GEMEAUX (FR)
(74) Mandataire: SEB Développement

(56) Documents cités:
- FR-A1- 2 984 713
- US-A1- 2020 315 389

## Description

La présente invention se rapporte à un couvercle chauffant amovible ainsi qu'à un appareil de cuisson électrique comportant un tel couvercle chauffant amovible.

Il est connu de disposer d'un couvercle chauffant amovible adapté au chauffage de denrées alimentaires disposées dans un ustensile de cuisine ou bien disposées dans la cuve d'un appareil de cuisson électrique, ledit ustensile et ladite cuve présentant un diamètre déterminé adapté à recevoir ledit couvercle chauffant amovible.

Ce couvercle chauffant amovible comprend un élément chauffant électrique, une poignée mobile et un dispositif de sécurité sous la forme d'un interrupteur.

Lorsque l'utilisateur saisit le couvercle chauffant amovible par sa poignée mobile alors le mouvement de la poignée mobile place l'interrupteur dans un état de fonctionnement dans lequel l'alimentation électrique de l'élément chauffant électrique est empêchée.

A contrario, lorsque l'utilisateur ne saisit pas la poignée mobile du couvercle chauffant amovible alors le positionnement de la poignée mobile place l'interrupteur dans un état de fonctionnement dans lequel l'alimentation électrique de l'élément chauffant électrique est permise.

Cependant, un tel couvercle chauffant amovible ne présente pas un niveau de sécurité suffisant car il est possible que l'utilisateur pose le couvercle chauffant amovible sur la surface du plan de travail sans que l'alimentation électrique de l'élément chauffant électrique soit empêchée.

Il est également connu du document FR2984713 de disposer d'un couvercle chauffant amovible adapté au chauffage de denrées alimentaires disposées dans un ustensile de cuisine comprenant un diamètre déterminé.

Ce couvercle chauffant amovible comprend un élément chauffant électrique, une poignée fixe et un dispositif de sécurité sous la forme d'un interrupteur.

Lorsque l'utilisateur saisit le couvercle chauffant amovible par sa poignée fixe pour le positionner sur l'ustensile de cuisine alors le bord de l'ustensile interagit avec l'interrupteur pour le faire basculer d'un état de fonctionnement dans lequel l'alimentation électrique de l'élément chauffant électrique est empêchée vers un état de fonctionnement dans lequel l'alimentation électrique de l'élément chauffant électrique est permise.

Cette solution présente un meilleur niveau de sécurité car l'alimentation électrique de l'élément chauffant électrique ne sera permise que si le couvercle chauffant amovible est placé sur l'ustensile de cuisine adapté à recevoir le couvercle chauffant amovible.

Cependant, ce couvercle chauffant amovible n'est adapté que pour fonctionner avec des ustensiles de cuisine présentant un même diamètre déterminé.

Ainsi, ce couvercle chauffant amovible ne peut pas s'adapter à d'autres diamètres d'ustensiles de cuisine ou de cuve d'appareil de cuisson électrique que ceux pour lesquels il est prévu.

La présente invention a pour but de résoudre tout ou partie des inconvénients cités ci-dessus.

A cet effet, la présente invention se rapporte à un couvercle chauffant amovible selon la revendication 1.

Cette disposition permet au couvercle chauffant amovible de pouvoir être utilisé avec des ustensiles de cuisine de dimensions différentes ou avec des appareils de cuisson électriques avec des différentes dimensions de cuves.

Selon un aspect de l'invention, les premiers moyens d'actionnement et les deuxièmes moyens d'actionnement sont réalisés en une seule pièce, ladite pièce étant mobile, de préférence en translation.

Cette disposition permet de simplifier la réalisation des premiers moyens d'actionnement et des deuxièmes moyens d'actionnement du dispositif de sécurité.

Selon un aspect de l'invention, les premiers moyens d'actionnement et les deuxièmes moyens d'actionnement sont réalisés dans des pièces différentes, chacune desdites pièces étant mobile de manière indépendante, de préférence en translation.

Selon une première alternative de l'invention, les premiers moyens d'actionnement sont formés par un premier épaulement de la pièce mobile du couvercle chauffant amovible et les deuxièmes moyens d'actionnement sont formés par un deuxième épaulement de la pièce mobile du couvercle chauffant amovible, le deuxième épaulement étant contigu au premier épaulement de la pièce mobile.

Selon une deuxième alternative de l'invention, la pièce mobile est une tige, les premiers moyens d'actionnement sont formés par l'extrémité de la tige et les deuxièmes moyens d'actionnement sont formés par un coude de cette même tige.

Cette disposition permet de créer deux points d'interaction à partir d'une même tige.

Selon un aspect de l'invention, le dispositif de sécurité comprend un interrupteur comprenant un actionneur mobile, la pièce mobile étant agencée pour actionner l'actionneur lorsque les premiers moyens d'actionnement ou les deuxièmes moyens d'actionnement se déplacent depuis leur première position de repos vers leur deuxième position escamotée.

Selon un aspect de l'invention, le dispositif de sécurité comprend un interrupteur comprenant un actionneur mobile, l'axe de déplacement de l'actionneur de l'interrupteur étant disposé dans l'axe principal de la tige.

Cette disposition permet d'optimiser les efforts sur l'actionneur mobile de l'interrupteur lorsque les premiers moyens d'actionnement ou les deuxièmes moyens d'actionnement sont sollicités.

Selon un aspect de l'invention, les premiers moyens d'actionnement débouchent dans un premier épaulement fixe du couvercle chauffant amovible et les deuxièmes moyens d'actionnement débouchent dans un deuxième épaulement fixe du couvercle chauffant amovible contigu au premier épaulement fixe du couvercle chauffant amovible.

Cette disposition permet de simplifier la mise en oeuvre des premiers moyens d'actionnement et deuxièmes moyens d'actionnement.

Selon un aspect de l'invention, le dispositif de sécurité comprend des moyens de rappel des premiers moyens d'actionnement dans leur première position et des deuxièmes moyens d'actionnement dans leur première position.

Cette disposition permet au dispositif de sécurité d'être par défaut dans son deuxième mode de fonctionnement.

Selon un aspect de l'invention, le couvercle chauffant amovible comprend deux moyens de sécurité disposés en opposition sur le couvercle chauffant amovible.

La présente invention se rapporte également à un appareil de cuisson électrique selon la revendication 10.

Selon un aspect non couvert par les revendications, l'appareil de cuisson électrique est un appareil de cuisson à air chaud ou un appareil de cuisson sous pression présentant un mode de fonctionnement sous pression avec l'utilisation d'un couvercle fixe relié au corps de l'appareil de cuisson électrique et un mode de cuisson sans pression avec ledit couvercle chauffant amovible.

L'invention sera bien comprise à l'aide de la description qui suit en référence aux dessins schématiques annexés représentant, à titre d'exemple non limitatif, une forme d'exécution de ce couvercle chauffant amovible.
[Fig 1] La figure 1 est une vue en coupe d'un couvercle chauffant amovible selon une première alternative de la présente invention.
[Fig 2] La figure 2 est une vue écorchée du couvercle chauffant amovible de la figure 1.
[Fig 3] La figure 3 est une vue détaillée en coupe sur une partie du couvercle chauffant amovible de la figure 1 dans un premier mode de fonctionnement du dispositif de sécurité du couvercle chauffant amovible selon l'invention.
[Fig 4] La figure 4 est une vue détaillée en coupe sur une partie du couvercle chauffant amovible de la figure 1 dans un deuxième mode de fonctionnement du dispositif de sécurité du couvercle chauffant amovible selon l'invention.
[Fig 5] La figure 5 montre un couvercle chauffant amovible en situation sur un appareil de cuisson électrique.
[Fig 6] La figure 6 est une vue en coupe d'un couvercle chauffant amovible selon une deuxième alternative de la présente invention.

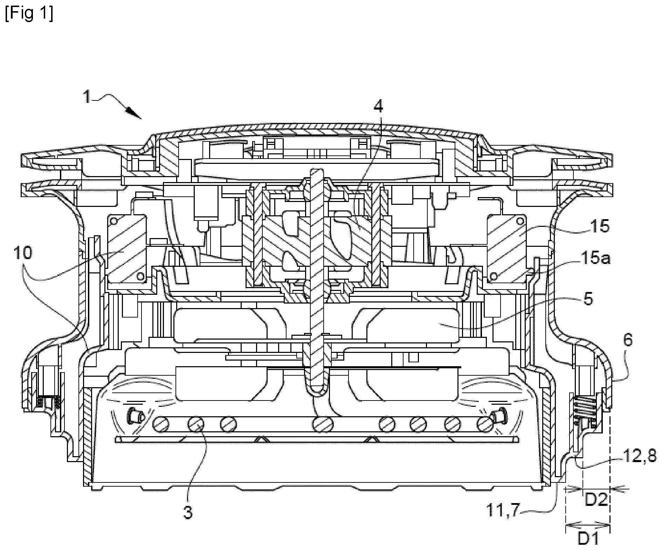

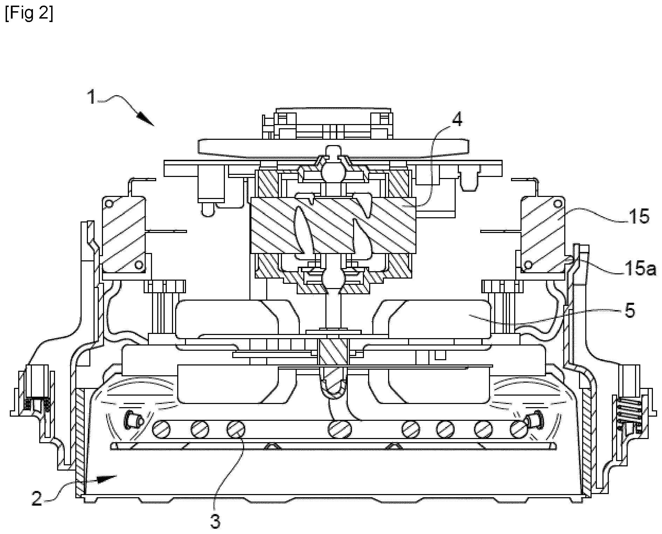

Comme illustré aux figures 1 et 2, un couvercle chauffant amovible 1 comprend un corps 2 sur lequel est agencé un élément chauffant électrique 3, et éventuellement un moteur 4 et un ventilateur 5 pour forcer un flux d'air chaud ainsi généré à se diriger vers des denrées alimentaires contenues dans un ustensile de cuisine ou bien disposées dans la cuve d'un appareil de cuisson électrique.

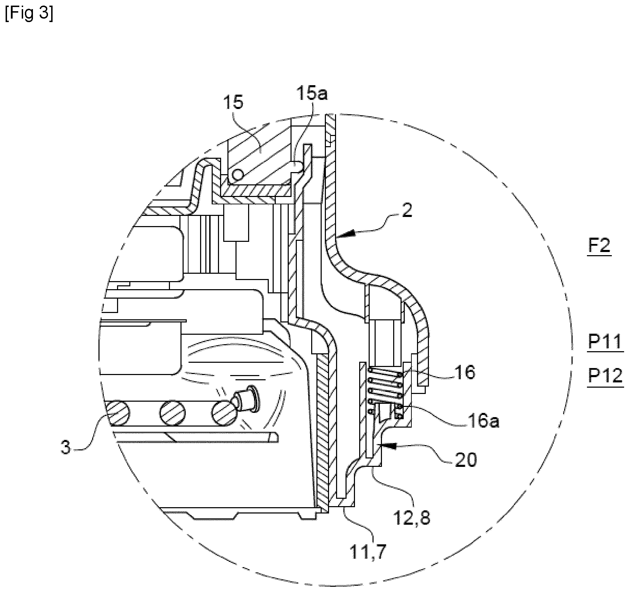

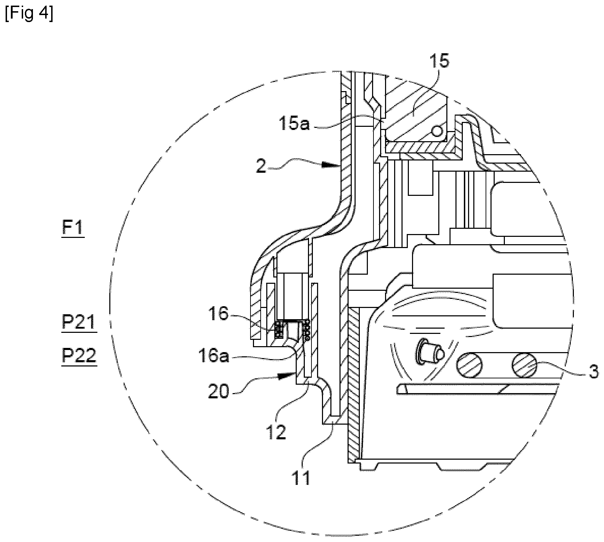

Comme illustré aux figures 1 à 4, le couvercle chauffant amovible 1 comprend également un dispositif de sécurité 10 comprenant des premiers moyens d'actionnement 11 positionnés à une première distance D1 d'un bord latéral 6 du couvercle chauffant amovible 1 et présentant une première position P11 de repos et une deuxième position P21 escamotée.

Comme illustré sur les figures 1 et 2, le couvercle chauffant amovible 1 comprend deux dispositifs de sécurité 10 disposés en opposition sur le couvercle chauffant amovible 1. Ces dispositifs de sécurité 10 sont identiques.

Selon l'invention, un même ou chaque dispositif de sécurité 10 comprend des deuxièmes moyens d'actionnement 12 positionnés à une deuxième distance D2 du bord latéral 6 du couvercle chauffant amovible 1. Cette deuxième distance D2 est différente de la première distance D1 du bord latéral 6 du couvercle chauffant amovible 1 dans lequel se trouvent les premiers moyens d'actionnement 11.

Tout comme les premiers moyens d'actionnement 11, les deuxièmes moyens d'actionnement 12 présentent également une première position P12 de repos et une deuxième position P22 escamotée.

, En outre, ledit dispositif de sécurité 10 présente un premier mode de fonctionnement F1 dans lequel l'alimentation électrique de l'élément chauffant électrique 3 est autorisée lorsque les premiers moyens d'actionnement 11 ou les deuxièmes moyens d'actionnement 12 sont placés dans leur deuxième position P21, P22 escamotée, et un deuxième mode de fonctionnement F2 dans lequel l'alimentation de l'élément chauffant électrique 3 n'est pas autorisée lorsque les premiers moyens d'actionnement 11 ou les deuxièmes moyens d'actionnement 12 sont dans leur première position P11, P12 de repos.

Dans le mode de réalisation illustré, les premiers moyens d'actionnement 11 et les deuxièmes moyens d'actionnement 12 sont réalisés en une seule pièce 20, si bien que lorsque les premiers moyens d'actionnement 11 passent de leur première position P11 de repos à leur deuxième position P21 escamotée alors les deuxièmes moyens d'actionnement 12 passent également de leur première position P12 de repos à leur deuxième position P22 escamotée et inversement.

Dans l'exemple présenté, cette pièce 20 est mobile en translation.

D'autres modes de réalisation sont envisageables dans lesquels les premiers moyens d'actionnement 11 et les deuxièmes moyens d'actionnement 12 seraient réalisés dans des pièces différentes. Ainsi, la sollicitation des premiers moyens d'actionnement 11 n'entrainerait pas la sollicitation des deuxièmes moyens d'actionnement 12.

Selon une première alternative de l'invention illustrée aux figures 1 à 5, les premiers moyens d'actionnement 11 sont formés par un premier épaulement 7 de la pièce 20 mobile en translation du couvercle chauffant amovible 1.

Les deuxièmes moyens d'actionnement 12 sont quant à eux formés par un deuxième épaulement 8 de la pièce 20 mobile en translation du couvercle chauffant amovible 1.

Le deuxième épaulement 8 est contigu au premier épaulement 7.

Le dispositif de sécurité 10 comprend des moyens de rappel 16 des premiers moyens d'actionnement 11 et des deuxièmes moyens d'actionnement 12 dans leur première position P11, P12 de repos.

Un tel moyen de rappel peut par exemple comprendre un ressort hélicoïdal 16a disposé entre une partie fixe du corps 2 du couvercle chauffant amovible 1 et une partie de la pièce 20 mobile.

En outre, le dispositif de sécurité 10 comprend un interrupteur 15 comprenant un actionneur 15a mobile en translation.

Bien entendu, tout autre dispositif électrique pouvant avoir la faculté d'interrompre le passage d'un courant électrique pourrait être utilisé à la place de l'interrupteur 15 sans pour autant sortir du cadre de l'invention.

La pièce 20 mobile en translation présente une patte 21 s'étendant jusqu'à l'actionneur 15a mobile de l'interrupteur.

Dans cette configuration, le dispositif de sécurité 10 est dans son premier mode de fonctionnement F1 dans lequel l'alimentation électrique de l'élément chauffant électrique 3 est autorisée.

A contrario, l'actionneur 15a de l'interrupteur 15 n'est pas sollicité lorsque les premiers moyens d'actionnement 11 ou les deuxièmes moyens d'actionnement 12 sont dans leur première position P11, P12 de repos.

Dans cette configuration, le dispositif de sécurité 10 est dans son deuxième mode de fonctionnement F2 dans lequel l'alimentation de l'élément chauffant électrique 3 n'est pas autorisée.

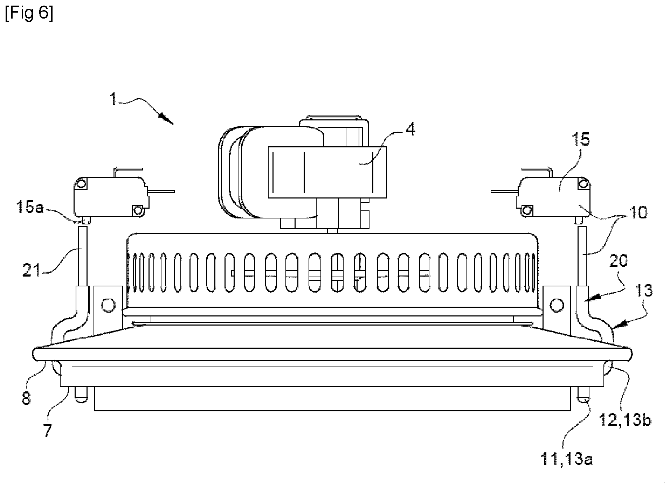

Selon une deuxième alternative de l'invention illustrée à la figure 6, la pièce 20 est toujours mobile, notamment en translation, mais est formée par une tige13, de préférence en métal.

Plus précisément, les premiers moyens d'actionnement 11 sont formés par l'extrémité 13a de cette tige 13 et les deuxièmes moyens d'actionnement 12 sont formés par un coude 13b de cette même tige 13.

Le dispositif de sécurité 10 est toujours un interrupteur 15 comprenant un actionneur 15a mobile en translation.

Cependant, l'axe de déplacement de l'actionneur 15a de l'interrupteur 15 est disposé dans l'axe de déplacement des premiers moyens d'actionnement 11, donc de l'extrémité 13a de la tige 13.

Comme illustré à la figure 6, les premiers moyens d'actionnement 11 débouchent dans un premier épaulement 7 fixe du couvercle chauffant amovible 1 et les deuxièmes moyens d'actionnement 12 débouchent dans un deuxième épaulement 8 fixe du couvercle chauffant amovible 1 contigu au premier épaulement 7 fixe du couvercle chauffant amovible 1. Enfin, le dispositif de sécurité 10 comprend également des moyens de rappel des premiers moyens d'actionnement 11 et des deuxièmes moyens d'actionnement 12 dans leur première position P11, P12 de repos.

Un tel moyen de rappel peut par exemple comprendre un ressort hélicoïdal disposé entre une partie fixe du corps 2 du couvercle chauffant amovible 1 et une partie mobile de la tige 13.

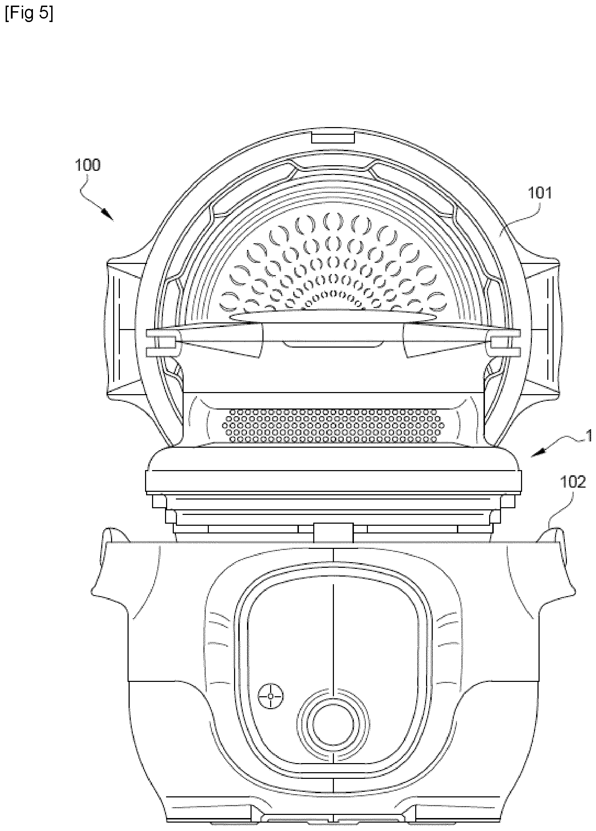

Comme illustré à la figure 5, la présente invention se rapporte également à un appareil de cuisson électrique 100 comprenant un couvercle chauffant amovible 1 tel que décrit précédemment selon l'une ou l'autre des alternatives et variantes.

Cet appareil de cuisson électrique 100 peut être un appareil de cuisson à air chaud ou un appareil de cuisson sous pression.

Cet appareil de cuisson électrique présente un mode de fonctionnement sous pression avec un couvercle fixe 101 et un mode de cuisson sans pression avec ledit couvercle chauffant amovible 1.

Lorsque le couvercle chauffant amovible 1 est positionné sur la cuve de cuisson 102 alors sous l'effet du poids du couvercle chauffant amovible 1, le bord de la cuve de cuisson 102 fait passer les premiers moyens d'actionnement ou les deuxièmes moyens d'actionnement, selon la dimension de la cuve de cuisson 102 de l'appareil de cuisson électrique 100, de leur première position P11, P12 de repos vers leur deuxième position P21, P22 escamotée.

Cela a pour conséquence de faire passer le dispositif de sécurité 10 depuis son deuxième mode de fonctionnement F2 dans lequel l'alimentation de l'élément chauffant électrique 3 n'est pas autorisée vers son premier mode de fonctionnement F1 dans lequel l'alimentation électrique de l'élément chauffant électrique 3 est autorisée.

Par l'invention, le couvercle chauffant amovible 1 associé à l'appareil de cuisson électrique peut également être utilisé avec un ustensile de cuisine, typiquement une poêle présentant une autre dimension que celle du bord de la cuve 102 de l'appareil de cuisson électrique 100.

Bien entendu, la présente invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection défini par les revendications.

C'est ainsi que le couvercle chauffant amovible 1 pourrait présenter d'autres formes que la forme circulaire, en particulier une forme rectangulaire ou carrée ou toute autre forme adaptée à la forme d'une cuve d'appareil de cuisson électrique.

## Revendications

1. Couvercle chauffant amovible (1) comprenant un élément chauffant électrique (3) et un dispositif de sécurité (10) comprenant des premiers moyens d'actionnement (11) positionnés à une première distance (D1) d'un bord latéral (6) du couvercle chauffant amovible (1) et présentant une première position (P11) de repos et une deuxième position (P21) escamotée, ledit dispositif de sécurité (10) présentant un premier mode de fonctionnement (F1) dans lequel l'alimentation électrique de l'élément chauffant électrique (3) est autorisée lorsque les premiers moyens d'actionnement (11) sont placés dans leur deuxième position (P21) escamotée, et un deuxième mode de fonctionnement (F2) dans lequel l'alimentation électrique de l'élément chauffant électrique (3) n'est pas autorisée lorsque les premiers moyens d'actionnement (11) sont dans leur première position (P11) de repos,
ledit couvercle chauffant amovible (1) étant **caractérisé en ce que** le même dispositif de sécurité (10) comprend des deuxièmes moyens d'actionnement (12) positionnés à une deuxième distance (D2) du bord latéral (6) du couvercle chauffant amovible (1) différente de la première distance (D1) du bord latéral (6) du couvercle chauffant amovible (1) dans lequel se trouvent les premiers moyens d'actionnement (11) et présentant également une première position (P12) de repos et une deuxième position (P22) escamotée, ledit dispositif de sécurité (10) étant également dans son premier mode de fonctionnement (F1) lorsque les deuxièmes moyens d'actionnement (12) sont placés dans leur deuxième position (P22) escamotée, et étant également dans son deuxième mode de fonctionnement (F2) lorsque les deuxièmes moyens d'actionnement (12) sont dans leur première position (P12) de repos.

2. Couvercle chauffant amovible (1) selon la revendication 1, dans lequel les premiers moyens d'actionnement (11) et les deuxièmes moyens d'actionnement (12) sont réalisés en une seule pièce (20), ladite pièce étant mobile, de préférence en translation.

3. Couvercle chauffant amovible (1) selon la revendication 1, dans lequel les premiers moyens d'actionnement (11) et les deuxièmes moyens d'actionnement (12) sont réalisés dans des pièces différentes, chacune desdites pièces étant mobile de manière indépendante, de préférence en translation.

4. Couvercle chauffant amovible (1) selon la revendication 2, dans lequel les premiers moyens d'actionnement (11) sont formés par un premier épaulement (7) de la pièce (20) mobile du couvercle chauffant amovible (1) et les deuxièmes moyens d'actionnement (12) sont formés par un deuxième épaulement (8) de la pièce (20) mobile du couvercle chauffant amovible (1), le deuxième épaulement (8) étant contigu au premier épaulement (7) de la pièce (20) mobile.

5. Couvercle chauffant amovible (1) selon la revendication 2, dans lequel la pièce (20) mobile est une tige (13), les premiers moyens d'actionnement (11) sont formés par l'extrémité (13a) de la tige (13) et les deuxièmes moyens d'actionnement (12) sont formés par un coude (13b) de cette même tige (13).

6. Couvercle chauffant amovible (1) selon l'une des revendications 2 ou 4 à 5, dans lequel le dispositif de sécurité (10) comprend un interrupteur (15) comprenant un actionneur (15a) mobile, la pièce (20) mobile étant agencée pour actionner l'actionneur (15a) lorsque les premiers moyens d'actionnement (11) ou les deuxièmes moyens d'actionnement (12) se déplacent depuis leur première position (P11, P12) de repos vers leur deuxième position (P21, P22) escamotée.

7. Couvercle chauffant amovible (1) selon l'une des revendications 4 à 5, dans lequel les premiers moyens d'actionnement (11) débouchent dans un premier épaulement (7) fixe du couvercle chauffant amovible (1) et les deuxièmes moyens d'actionnement (12) débouchent dans un deuxième épaulement (8) fixe du couvercle chauffant amovible (1) contigu au premier épaulement (7) fixe du couvercle chauffant amovible (1).

8. Couvercle chauffant amovible (1) selon l'une des revendications 1 à 7, dans lequel le dispositif de sécurité (10) comprend des moyens de rappel (16) des premiers moyens d'actionnement (11) dans leur première position (P11) et des deuxièmes moyens d'actionnement (12) dans leur première position (P12).

9. Couvercle chauffant amovible (1) selon l'une des revendications 1 à 8, comprenant deux moyens de sécurité (10) disposés en opposition sur le couvercle chauffant amovible (1).

10. Appareil de cuisson électrique (100) comprenant une cuve de cuisson (102) et un couvercle chauffant amovible (1) selon l'une des revendications 1 à 9.

## Patentansprüche

1. Abnehmbarer Heizdeckel (1), umfassend ein elektrisches Heizelement (3) und eine Sicherheitsvorrichtung (10), umfassend erste Betätigungsmittel (11), die in einem ersten Abstand (D1) zu einem Seitenrand (6) des abnehmbaren Heizdeckels (1) positioniert sind und eine ruhende, erste Position (P11) und eine eingezogene, zweite Position (P21) aufweisen, wobei die Sicherheitsvorrichtung (10) einen ersten Betriebsmodus (F1), bei dem die elektrische Versorgung des elektrischen Heizelements (3) zugelassen ist, wenn die ersten Betätigungsmittel (11) in ihrer eingezogenen, zweiten Position (P21) platziert sind, und einen zweiten Betriebsmodus (F2) aufweisen, bei dem die elektrische Versorgung des elektrischen Heizelements (3) nicht zugelassen ist, wenn die ersten Betätigungsmittel (11) in ihrer ruhenden, ersten Position (P11) sind,
wobei der abnehmbare Heizdeckel (1) **dadurch gekennzeichnet ist, dass** dieselbe Sicherheitsvorrichtung (10) zweite Betätigungsmittel (12) umfasst, die in einem zweiten Abstand (D2) zum Seitenrand (6) des abnehmbaren Heizdeckels (1) positioniert sind, der sich vom ersten Abstand (D1) zum Seitenrand (6) des abnehmbaren Heizdeckels (1), in dem sich die ersten Betätigungsmittel (11) befinden, unterscheidet, und ebenfalls eine ruhende, erste Position (P12) und eine eingezogene, zweite Position (P22) aufweisen, wobei die Sicherheitsvorrichtung (10) ebenfalls in ihrem ersten Betriebsmodus (F1) ist, wenn die zweiten Betätigungsmittel (12) in ihrer eingezogenen, zweiten Position (P22) platziert sind, und ebenfalls in ihrem zweiten Betriebsmodus (F2) ist, wenn die zweiten Betätigungsmittel (12) in ihrer ruhenden, ersten Position (P12) sind.

2. Abnehmbarer Heizdeckel (1) nach Anspruch 1, wobei die ersten Betätigungsmittel (11) und die zweiten Betätigungsmittel (12) aus einem einzigen Teil (20) hergestellt sind, wobei das Teil beweglich ist, vorzugsweise translatorisch.

3. Abnehmbarer Heizdeckel (1) nach Anspruch 1, wobei die ersten Betätigungsmittel (11) und die zweiten Betätigungsmittel (12) aus unterschiedlichen Teilen hergestellt sind, wobei jedes der Teile auf unabhängige Weise beweglich ist, vorzugsweise translatorisch.

4. Abnehmbarer Heizdeckel (1) nach Anspruch 2, wobei die ersten Betätigungsmittel (11) durch einen ersten Anschlag (7) des beweglichen Teils (20) des abnehmbaren Heizdeckels (1) gebildet sind und die zweiten Betätigungsmittel (12) durch einen zweiten Anschlag (8) des beweglichen Teils (20) des abnehmbaren Heizdeckels (1) gebildet sind, wobei der zweite Anschlag (8) an den ersten Anschlag (7) des beweglichen Teils (20) angrenzt.

5. Abnehmbarer Heizdeckel (1) nach Anspruch 2, wobei das bewegliche Teil (20) ein Stab (13) ist, die ersten Betätigungsmittel (11) durch das Ende (13a) des Stabs (13) gebildet sind und die zweiten Betätigungsmittel (12) durch ein Kniestück (13b) dieses selben Stabs (13) gebildet sind.

6. Abnehmbarer Heizdeckel (1) nach einem der Ansprüche 2 oder 4 bis 5, wobei die Sicherheitsvorrichtung (10) einen Schalter (15) umfasst, der einen beweglichen Aktuator (15a) umfasst, wobei das bewegliche Teil (20) eingerichtet ist, um den Aktuator (15a) zu betätigen, wenn die ersten Betätigungsmittel (11) oder die zweiten Betätigungsmittel (12) sich ausgehend von ihrer ruhenden, ersten Position (P11, P12) in ihre eingezogene, zweite Position (P21, P22) verschieben.

7. Abnehmbarer Heizdeckel (1) nach einem der Ansprüche 4 bis 5, wobei die ersten Betätigungsmittel (11) in einen ersten festen Anschlag (7) des abnehmbaren Heizdeckels (1) münden und die zweiten Betätigungsmittel (12) in einen zweiten festen Anschlag (8) des abnehmbaren Heizdeckels (1) münden, der an den ersten festen Anschlag (7) des abnehmbaren Heizelements (1) angrenzt.

8. Abnehmbarer Heizdeckel (1) nach einem der Ansprüche 1 bis 7, wobei die Sicherheitsvorrichtung (10) Rückstellmittel (16) der ersten Betätigungsmittel (11) in ihre erste Position (P11) und zweite Rückstellmittel (12) in ihre erste Position (P12) umfasst.

9. Abnehmbarer Heizdeckel (1) nach einem der Ansprüche 1 bis 8, umfassend zwei Sicherheitsmittel (10), die gegenüberliegend auf dem abnehmbaren Heizdeckel (1) angeordnet sind.

10. Elektrische Kocheinrichtung (100), umfassend einen Kochbehälter (102) und einen abnehmbaren Heizdeckel (1) nach einem der Ansprüche 1 bis 9.

## Claims

1. Removable heating lid (1) comprising an electric heating element (3) and a safety device (10), comprising first actuation means (11) positioned at a first distance (D1) from a side edge (6) of the removable heating lid (1) and having a first rest position (P11) and a second retracted position (P21), said safety device (10) having a first operating mode (F1), wherein the power supply of the electric heating element (3) is enabled when the first actuation means (11) are placed in their second retracted position (P21), and a second operating mode (F2), wherein the power supply of the electric heating element (3) is not enabled when the first actuation means (11) are in their first rest position (P11),
said removable heating lid (1) being **characterised in that** the same safety device (10) comprises second actuation means (12) positioned at a second distance (D2) from the side edge (6) of the removable heating lid (1) different from the first distance (D1) of the side edge (6) from the removable heating lid (1), wherein the first actuation means (11) are located and also have a first rest position (P12) and a second retracted position (P22), said safety device (10) also being in its first operating mode (F1) when the second actuation means (12) are placed in their second retracted position (P22), and also being in its second operating mode (F2) when the second actuation means (12) are in their first rest position (P12).

2. Removable heating lid (1) according to claim 1, wherein the first actuation means (11) and the second actuation means (12) are made of one single part (20), said part being movable, preferably in translation.

3. Removable heating lid (1) according to claim 1, wherein the first actuation means (11) and the second actuation means (12) are made of different parts, each of said parts being independently movable, preferably in translation.

4. Removable heating lid (1) according to claim 2, wherein the first actuation means (11) are formed by a first shoulder (7) of the movable part (20) of the removable heating lid (1) and the second actuation means (12) are formed by a second shoulder (8) of the movable part (20) of the removable heating lid (1), the second shoulder (8) being contiguous to the first shoulder (7) of the movable part (20).

5. Removable heating lid (1) according to claim 2, wherein the movable part (20) is a rod (13), the first actuation means (11) are formed by the end (13a) of the rod (13) and the second actuation means (12) are formed by a bend (13b) of this same rod (13).

6. Removable heating lid (1) according to one of claims 2 or 4 to 5, wherein the safety device (10) comprises a switch (15) comprising a movable actuator (15a), the movable part (20) being arranged to actuate the actuator (15a) when the first actuation means (11) or the second actuation means (12) are moved from their first rest position (P11, P12) to their second retracted position (P21, P22).

7. Removable heating lid (1) according to one of claims 4 to 5, wherein the first actuation means (11) lead into a first fixed shoulder (7) of the removable heating lid (1) and the second actuation means (12) lead into a second fixed shoulder (8) of the removable heating lid (1) contiguous to the first fixed shoulder (7) of the removable heating lid (1).

8. Removable heating lid (1) according to one of claims 1 to 7, wherein the safety device (10) comprises means (16) for returning the first actuation means (11) into their first position (P11) and the second actuation means (12) into their first position (P12).

9. Removable heating lid (1) according to one of claims 1 to 8, comprising two safety means (10) disposed opposite one another on the removable heating lid (1).

10. Electric cooking appliance (100) comprising a cooking vessel (102) and a removable heating lid (1) according to one of claims 1 to 9.
